# EUROPEAN PATENT APPLICATION

(11) **EP 4 067 135 A1**
(43) Date of publication of application: **05.10.2022**
(21) Application number: 21199400.9
(22) Date of filing: 28.09.2021
(51) Int. Cl.: B60H 1/34

(54) **SLIM AIR VENT FOR VEHICLE**

(30) Priority: 01.04.2021 KR 20210042798
(71) Applicant: HYUNDAI MOTOR COMPANY, Seoul 06797 (KR); Kia Corporation, Seocho-gu Seoul 06797 (KR); ITW EF&C Korea LLC., Incheon 21692 (KR)
(72) Inventor: LEE, Yong Woo, Gyeonggi-do (KR); KIM, Keong No, Incheon (KR); KIM, Byung Jo, Incheon (KR)
(74) Representative: Isarpatent

(57) **Abstract**

Slim air vent apparatus for a vehicle, comprising an external wing (300) located at a rear of an internal wing (200), wherein a first end portion and a second end portion of the external wing (300) are coupled to a duct (100) to be rotatable vertically with respect to the duct (100), and a knob (400) coupling the internal wing (200) and the external wing (300) wherein the internal wing (200) and the external wing (300) are located inside the duct (100).

## Description

### BACKGROUND OF THE INVENTION

### Field of the Invention

The present invention relates to a slim air vent apparatus for a vehicle, and more particularly, to a slim air vent apparatus for a vehicle of which vertical height is reduced, while satisfying a performance criteria for an air direction and air volume.

### Description of Related art

In general, an air vent for discharging cold or warm air into a vehicle interior is provided on a dashboard of a vehicle.

The air vent includes an internal wing that rotates in a left and right direction and an external wing that rotates in an up and down direction and is configured to discharge cold air or warm air generated by an air conditioner in the left and right direction and up and down direction through rotation of the internal wing and the external wing.

The air vent of the related art includes a plurality of external wings rotating in the up and down direction, and the plurality of external wings are vertically stacked and spaced from each other. Accordingly, when the air vent is viewed from the interior of the vehicle, a length of the air vent in the up and down direction is long (i.e., a height in the up and down direction is high) and a length thereof in the left and right direction is equal to the length in the up and down direction thereof, and as a result, the air vent of the related art is large in appearance and crude, making it difficult to pursue a smart image and an image of high quality.

The information included in this Background of the Invention section is only for enhancement of understanding of the general background of the invention and may not be taken as an acknowledgement or any form of suggestion that this information forms the prior art already known to a person skilled in the art.

### BRIEF SUMMARY

Various aspects of the present invention are directed to providing a slim air vent apparatus for a vehicle in which a single external wing which rotates in an up and down direction is provided, thus reducing a height in the up and down direction thereof, while satisfying a performance criteria for an air direction and air volume, and implementing a smart image and an image of high quality.

According to various exemplary embodiments of the present invention, a slim air vent apparatus for a vehicle includes: one external wing located at a rear of an internal wing, , wherein a first end portion and a second end portion of the external wing are coupled to a duct to be rotatable vertically with respect to the duct; and a knob coupling the internal wing and the external wing, wherein the internal wing and the external wing are located inside the duct.

The slim air vent apparatus may further include: a pair of spacers installed to face left and right sides of the external wing from left and right sides of the duct, wherein at least one of the spacers includes a guide slot extending along a rotation radius of the external wing, and a guide protrusion is provided on at least one of the first and second sides of the external wing and inserted into the guide slot to move along the guide slot when the external wing rotates.

The slim air vent apparatus may further include: a pair of spacers installed to face left and right sides of the external wing from left and right sides of the duct, wherein at least one of the spacers includes a plurality of stopper recesses spaced from each other along a rotation radius of the external wing and recessed concavely, and a ball configured to be selectively inserted into one of the stopper recesses and a spring elastically supporting the ball may be provided on the left and right sides of the external wing.

A wing rod may be integrally provided and protrudes forwards from the first and second sides of the external wing and overlap the internal wing, a coupling member penetrating an end portion of the wing rod may be fixed to the duct, and the external wing may be coupled to be rotatable vertically with respect to the duct based on the coupling member.

The slim air vent apparatus may further include an upper dummy wing and a lower dummy wing coupled to the duct and located at upper and lower sides of the external wing, wherein air is discharged through an upper flow path formed between the external wing and the upper dummy wing and a lower flow path formed between the external wing and the lower dummy wing.

When the external wing fully rotates upwards, air passing through the internal wing may be discharged in an upward direction through the lower flow path.

When the external wing fully rotates downwards, air passing through the internal wing may be discharged in a downward direction through the upper flow path.

The external wing may have a rhombic cross-section to improve directivity of air moving from the duct to the upper flow path and from the duct to the lower flow path.

An upper surface and a lower surface of the external wing may be vertically symmetrical so that an air volume of air moving from the duct to the upper flow path and an air volume of air moving from the duct to the lower flow path are equal to each other when the external wing is located in an intermediate position between the upper dummy wing and the lower dummy wing.

A downwardly inclined surface and an upwardly inclined surface of a lower surface of the upper dummy wing facing the external wing may be connected from the front to the rear thereof, and the downwardly inclined surface may be longer than the upwardly inclined surface to improve directivity of air moving from the duct to the upper flow path.

An upwardly inclined surface and a downwardly inclined surface of an upper surface of the lower dummy wing facing the external wing may be connected from the front to the rear thereof, and the upwardly inclined surface may be longer than the downwardly inclined surface to improve directivity of air moving from the duct to the lower flow path.

A lower surface of the upper dummy wing and an upper surface of the lower dummy wing may be vertically symmetrical so that an air volume of air moving from the duct to the upper flow path and an air volume of air moving from the duct to the lower flow path are equal to each other when the external wing is located in an intermediate position between the upper dummy wing and the lower dummy wing.

In the slim air vent apparatus for a vehicle according to various exemplary embodiments of the present invention, only one external wing rotating in the up and down direction is provided per duct, while satisfying a performance criteria of the air vent for an air direction, air volume, directivity of air direction, noise, and airtightness, significantly reducing a height of the air vent in the up and down direction, and thus, the air vent may be configured to be compact and slim, a smart image and a high-quality image may be provided, and in particular, the slim air vent apparatus for a vehicle may be applied to an autonomous vehicle having a smart image.

Furthermore, in the slim air vent apparatus according to various exemplary embodiments of the present invention, since the internal wing and the external wing are located to be inserted inside the duct, whereby the slim air vent apparatus may be implemented, and in particular, a hidden feeling may be provided, and the appearance may be improved.

Furthermore, in the slim air vent apparatus according to various exemplary embodiments of the present invention, since only the operation portion of the knob protrudes outwards from the duct, providing a hidden feeling and improving the appearance.

Furthermore, in the slim air vent apparatus according to various exemplary embodiments of the present invention, a function is implemented by manually operating the single knob located in the center portion of the external wing by the user, and thus, user convenience of operation may be improved through the configuration of operating the single knob, and in particular, unit costs may be reduced through the manual operation of the knob 400 and the slim air vent apparatus may be universally applied.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a front view of a slim air vent apparatus according to various exemplary embodiments of the present invention.
FIG. 2 is an exploded perspective view of a slim air vent apparatus according to various exemplary embodiments of the present invention.
FIG. 3 is a side view of FIG. 1, illustrating a state in which an external wing is located in the middle of an up and down direction.
FIG. 4 and FIG. 5 are views exemplarily illustrating a state in which an external wing is rotated upward and a state in which the external wing is rotated downwardly in FIG. 3.
FIG. 6 is a view exemplarily illustrating a stopper recess, a ball, and a spring according to various exemplary embodiments of the present invention.

It may be understood that the appended drawings are not necessarily to scale, presenting a somewhat simplified representation of various features illustrative of the basic principles of the present invention. The specific design features of the present invention as disclosed herein, including, for example, specific dimensions, orientations, locations, and shapes will be determined in part by the particularly intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the present invention(s) will be described in conjunction with exemplary embodiments of the present invention, it will be understood that the present description is not intended to limit the present invention(s) to those exemplary embodiments. On the other hand, the present invention(s) is/are intended to cover not only the exemplary embodiments of the present invention, but also various alternatives, modifications, equivalents and other embodiments, which may be included within the spirit and scope of the present invention as defined by the appended claims.

While a specific structural or functional description with respect to exemplary embodiments according to various exemplary embodiments of the present invention included in the exemplary embodiment of the present invention is merely provided for describing the embodiments of the present invention, there are various modifications configured for replacing the embodiments, and the present invention is not limited to the embodiments described in the exemplary embodiment of the present invention.

While the embodiments according to various exemplary embodiments of the present invention are susceptible to various modifications and alternative forms, specific embodiments thereof are shown by way of examples in the drawings and will herein be described in detail. It should be understood, however, that there is no intent to limit the present invention to the particular forms disclosed, but on the contrary, the present invention is to cover all modifications, equivalents, and alternatives falling within the spirit and scope of the present invention.

It will be understood that, although the terms "first," "second," etc. may be used herein to describe various elements, these elements should not be limited by these terms. These terms are only used to distinguish one element from another. For example, a first element could be termed a second element, and similarly, a second element could be termed a first element, without departing from the scope of the inventive concept.

It will be understood that when an element is referred to as being "connected" or "coupled" to another element, it can be directly connected or coupled to the other element or intervening elements may be present. In contrast, it will be understood that when an element is referred to as being "directly connected" or "directly coupled" to another element, there are no intervening elements present. Other expressions describing a relation between elements, that is, ""between" and "directly between", or "adjacent to^{~}" and "directly adjacent to^{~}", etc. should be similarly understood.

The terminology used herein is for the purpose of describing various exemplary embodiments only and is not intended to limit the present invention. As used herein, the singular forms "a", "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms used herein including the technical or scientific terms have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A control unit (controller) according to various exemplary embodiments of the present invention may be implemented through a nonvolatile memory configured to store data related to an algorithm configured to control operations of various components of a vehicle or data regarding a software instruction to reproduce the algorithm and a processor configured to perform an operation described hereinafter using the data stored in the corresponding memory. Here, the memory and the processor may be implemented as separate chips. Alternatively, the memory and processor may be implemented as a single chip integrated with each other. The processor may have a form of one or more processors.

Hereinafter, a slim air vent apparatus for a vehicle according to various exemplary embodiments of the present invention will be described with reference to the accompanying drawings.

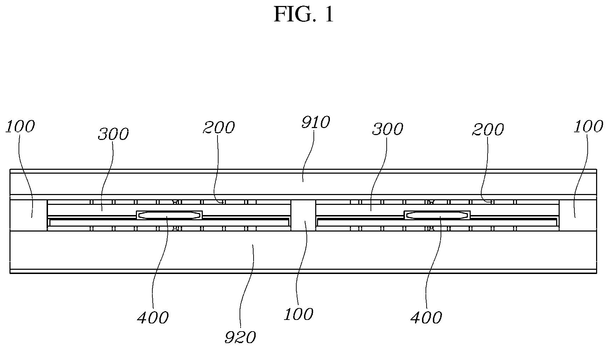

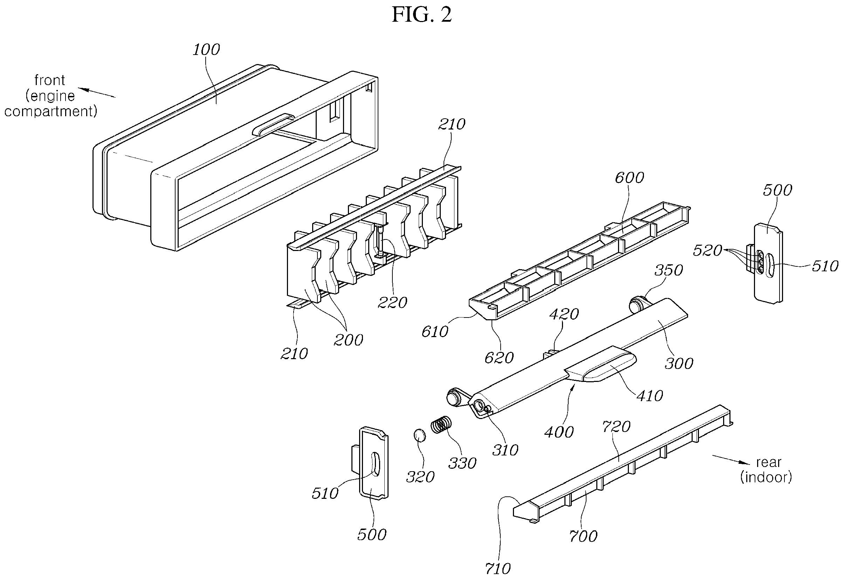

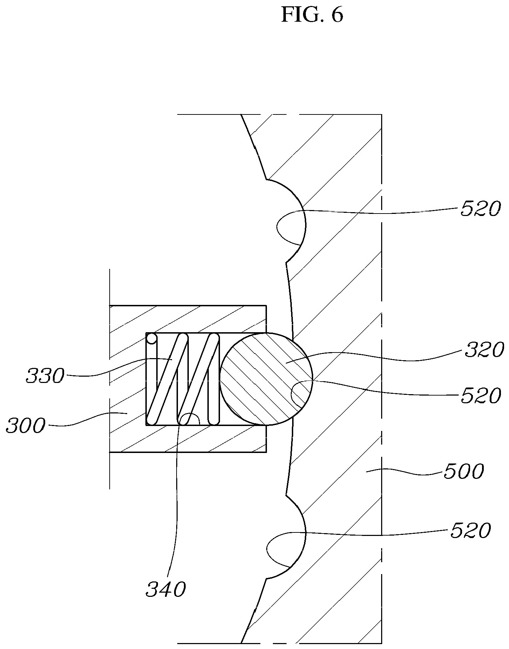

As shown in FIGS. 1 to 6, a slim air vent apparatus for a vehicle according to various exemplary embodiments of the present invention includes a duct 100 guiding an air flow to an indoor area, a plurality of internal wings 200 coupled to be rotatable horizontally with respect to the duct 100 to guide air to be discharged in a left and right direction, one external wing 300 located at the rear of the internal wing 200 and having left and right end portions coupled to be rotatable vertically with respect to the duct 100 and guiding air to be discharged in an up and down direction, one external wing 300 being coupled to one duct 100, and a knob 400 coupled to connect the internal wing 200 to the external wing 300.

The internal wing 200 is provided as a plurality of internal wings which are disposed horizontally, and the plurality of internal wings 200 are integrally connected through a linkage 210 coupled to upper and lower end portions, and the linkage 210 is rotatably coupled to the duct 100, so that when any one of the plurality of internal wings 200 rotates horizontally, the other internal wings 200 connected through the linkage 210 also rotate horizontally at the same time.

According to various exemplary embodiments of the present invention has a configuration in which the external wing 300 which rotates vertically with respect to the duct 100 to guide air to be discharged in the up and down direction is coupled one by one per duct 100, and thus, compared with the air vent of the related art having a structure in which a plurality of external wings are stacked vertically in one duct, a height of the air vent in the up and down direction may be significantly reduced, whereby a slim air vent apparatus may be configured and a smart image and a high quality image may be provided to be applied to an autonomous vehicle having a smart image.

Furthermore, in the air vent according to various exemplary embodiments of the present invention, both the internal wing 200 and the external wing 300 are located to be inserted into the interior of the duct 100, through which a slim air vent apparatus may be easily implemented, a hidden feeling may be provided, and an appearance may be improved.

The slim air vent apparatus according to various exemplary embodiments of the present invention shown in FIG. 1 has a structure in which one external wing 300 is coupled to one duct 100, and the two ducts 100 are disposed to be connected horizontally so that two external wings 300 are disposed horizontally.

The internal wing 200 and the external wing 300 may be referred to as a vertical wing and a horizontal wing, respectively, according to installation directions.

The knob 400 includes an operation portion 410 that the user operates by hand a coupling portion 420 protruding forward from the operation portion 410.

The operation portion 410 of the knob 400 is coupled to a rear end portion of the external wing 300 and is movable along the left and right direction thereof, which is a longitudinal direction of the external wing 300, and the coupling portion 420 of the knob 400 is coupled with the vertical rod 220 of the internal wing 200 to be movable along the up and down direction thereof, which is a longitudinal direction of the vertical rod 220.

When the user operates and moves the operation portion 410 of the knob 400 to the left and right of the external wing 300, the coupling portion 420 moves the vertical rod 220 horizontally so that the internal wing 200 rotates horizontally with respect to the duct 100 through the linkage 210, and at the instant time, the external wing 300 does not rotate vertically and maintains its position.

Furthermore, when the user operates the operation portion 410 of the knob 400 vertically, the external wing 300 rotates vertically with respect to the duct 100, and at the instant time, the coupling portion 420 of the knob 400 moves vertically along the vertical rod 220, and as a result, the internal wing 200 does not rotate horizontally and maintains its position.

In according to various exemplary embodiments of the present invention, only the operation portion 410 of the knob 400 protrudes to the outside (rear, indoor) of the duct 100, so that a hidden feeling may be provided and the appearance may be improved.

The slim air vent apparatus according to various exemplary embodiments of the present invention further includes a pair of spacers 500 provided to face left and right sides of the external wing 300 on the left and right sides of the duct 100.

The spacer 500 is also configured to block an unnecessary gap between the side of the duct 100 and the side of the external wing 300 to prevent air leakage, preventing an occurrence of whistle noise due to air leakage.

The spacer 500 includes a guide slot 510 extending along a rotation radius of the external wing 300, and the external wing 300 includes a guide protrusion 310 formed on the left and right sides of the external wing 300 and inserted into the guide slot 510 to move along the guide slot 510 when the external wing 300 rotates.

The guide protrusion 310 and the guide slot 510 are configured to guide vertical rotation of the external wing 300 and further are configured to connect the duct 100 and the external wing 300 through the spacer 500 to make the coupling structure of the external wing 300 more solid.

Furthermore, the spacer 500 includes a plurality of stopper recesses 520 spaced from each other along a rotation radius of the external wing 300 and having a concave shape. A ball 320 inserted into the stopper recess 520 and a spring 330 elastically supporting the ball 320 are provided on the left and right sides of the external wing 300.

An installation recess 340 for installation of the ball 320 and the spring 330 is provided on left and right sides of the external wing 300. Elastic force of the spring 330 acts in a direction in which the ball 320 protrudes from the installation recess 340, and the ball 320 is provided such that the ball is prevented from escaping from the installation recess 340.

When the external wing 300 rotates in the up and down direction thereof, the guide protrusion 310 moves along the guide slot 510, and at the instant time, the ball 320 is inserted into the stopper recess 520 by the elastic force of the spring 330. Due to the coupling of the ball 320 and the stopper recess 520, when the external wing 300 rotates in the up and down direction, a position of the external wing 300 is fixed and a feeling of operation is provided to a user.

According to various exemplary embodiments of the present invention, a wing rod 350 protruding forward from the left and right sides of the external wing 300 is integrally provided. The wing rod 350 is located to overlap the internal wing 200, a coupling member 360 penetrating an end portion of the duct 100 is fixed to the duct 100, and thus, the external wing 300 is coupled to be rotatable vertically with respect to the duct 100 based on the coupling member 360.

The coupling member 360 may be any one of a bolt, a screw, or other components having a coupling structure.

As the wing rod 350 of the external wing 300 is configured to overlap the internal wing 200, a length from a front end portion of the internal wing 200 to a rear end portion of the external wing 300 may be reduced, configuring a compact air vent and making the air vent slim.

The slim air vent apparatus according to various exemplary embodiments of the present invention further includes an upper dummy wing 600 and a lower dummy wing 700 coupled to upper and lower sides of the duct 100 to be located on the upper and lower sides of the external wing 300, and air passing through the internal wing 200 through the duct 100 may move through an upper flow path 810 between the external wing 300 and the upper dummy wing 600 and a lower flow path 820 between the external wing 300 and the lower dummy wing 700 to be discharged to an indoor area.

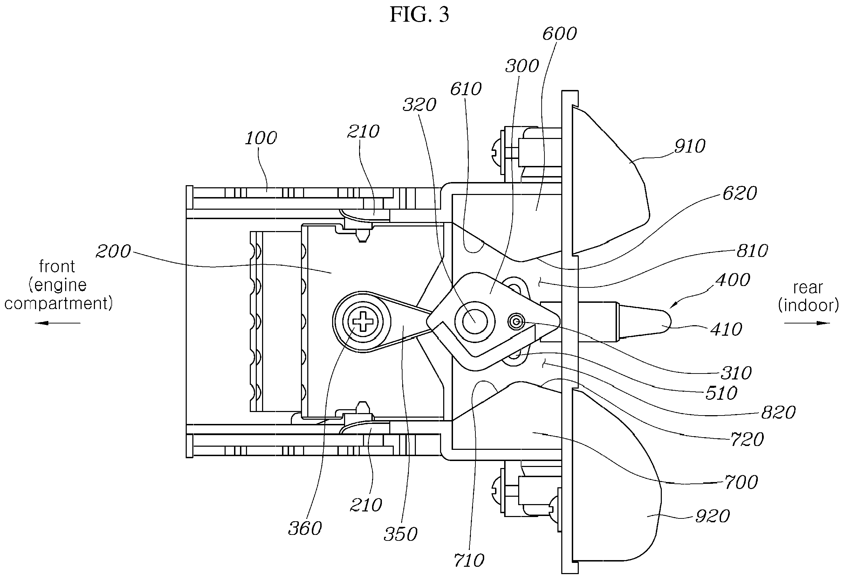

As shown in FIG. 3, as the external wing 300 is located between the upper dummy wing 600 and the lower dummy wing 700 so both the upper flow path 810 and the lower flow path 820 are open, air moves through the upper flow path 810 and the lower flow path 820 and is discharged into the indoor area.

The state of FIG. 3 is a state in which the external wing 300 is located in an intermediate position between the upper dummy wing 600 and the lower dummy wing 700, and at the present time, air volumes of air moving through the upper flow path 810 and the lower flow path 820 are almost the same.

In the state of FIG. 3, as the external wing 300 rotates upward, a sectional area of a passage of the upper flow path 810 gradually decreases, and conversely, a sectional area of a passage of the lower flow path 820 gradually increases, and therefore, the air volume of the lower flow path 820 is greater than the air volume of the upper flow path 810.

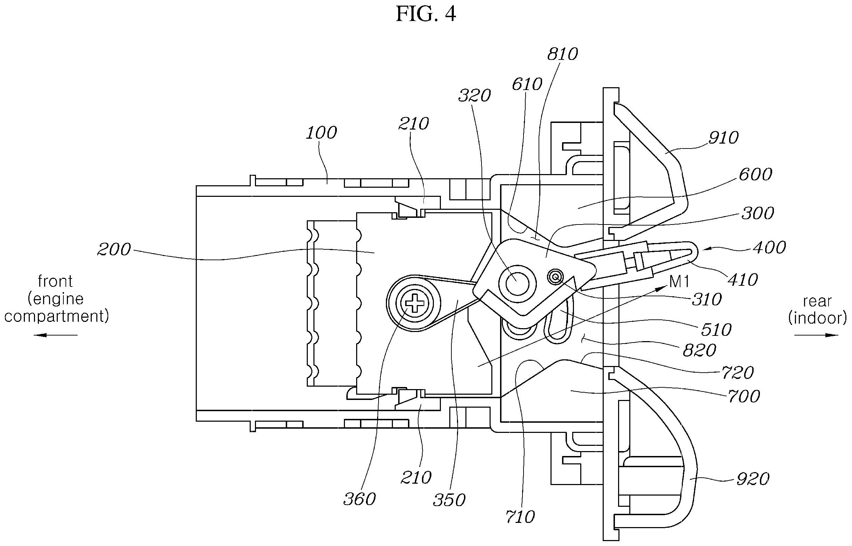

As shown in FIG. 4, when the external wing 300 fully rotates upwards, the upper flow path 810 is almost hermetically closed, the lower flow path 820 is fully open, and accordingly, air that has passed through the internal wing 200 through the duct 100 is mostly discharged in an upward direction through the lower flow path 820 (the arrow Ml).

Here, the operation portion 410 of the knob 400 may contact with an upper garnish 910 coupled to the duct 100.

In the state of FIG. 3, as the external wing 300 rotates downwards, a sectional area of a passage of the lower flow path 820 gradually decreases, and conversely, a sectional area of a passage of the upper flow path 810 gradually increases, and therefore, the air volume of the upper flow path 810 is greater than the air volume of the lower flow path 820.

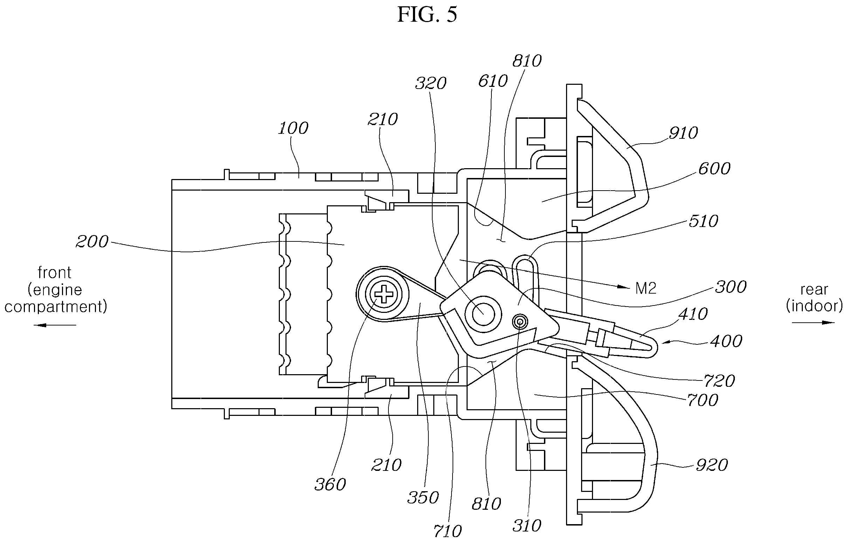

As shown in FIG. 5, when the external wing 300 fully rotates downwards, the lower flow path 820 is almost hermetically closed, the upper flow path 810 is fully open, and accordingly, air that has passed through the internal wing 200 through the duct 100 is mostly discharged in a downward direction through the upper flow path 810 (the arrow M2).

At the present time, the operation portion 410 of the knob 400 may contact with a lower garnish 920 coupled to the duct 100.

The external wing 300 according to various exemplary embodiments of the present invention may have a rhombic cross section to improve directivity of air volume of air moving from the duct 100 to the upper flow path 810 and from the duct 100 to the lower flow path 820.

An upper surface and a lower surface of the external wing 300 may be formed to be vertically symmetrical so that an air volume of air moving from the duct 100 to the upper flow path 810 and an air volume of air moving from the duct 100 to the lower flow path 820 may be equal when the external wing 300 is located in an intermediate position between the upper dummy wing 600 and the lower dummy wing 700 as shown in FIG. 3.

In according to various exemplary embodiments of the present invention, a lower surface of the upper dummy wing 600 facing the external wing 300 has a shape in which a downwardly inclined surface 610 and an upwardly inclined surface 620 are connected from the front to the rear thereof, and the downwardly inclined surface 610 is formed to be longer than the upwardly inclined surface 620 to improve directivity of an air direction of air moving from the duct 100 to the upper flow path 810.

Furthermore, an upper surface of a lower dummy wing 700 facing the external wing 300 has a shape in which an upwardly inclined surface 710 and a downwardly inclined surface 720 are connected from the front to the rear thereof, and the upwardly inclined surface 710 is formed to be longer than the downwardly inclined surface 720 to improve directivity of an air direction of air moving from the duct 100 to the lower flow path 820.

Furthermore, in according to various exemplary embodiments of the present invention, the downwardly inclined surface 610 and the upwardly inclined surface 620 corresponding to the lower surface of the upper dummy wing 600 and the upwardly inclined surface 710 and the downwardly inclined surface 720 corresponding to the upper surface of the lower dummy wing 700 are vertically symmetrical, whereby an air volume of air moving from the duct 100 to the upper flow path 810 and an air volume of air moving from the duct 100 to the lower flow path 820 may be equal when the external wing 300 is located in an intermediate position between the upper dummy wing 600 and the lower dummy wing 700 as shown in FIG. 3.

As described above, in the slim air vent apparatus for a vehicle according to various exemplary embodiments of the present invention, only one external wing 300 rotating in the up and down direction is provided per duct 100, while satisfying a performance criteria of the air vent for an air direction thereof, air volume, directivity of air direction, noise, and airtightness, significantly reducing a height of the air vent in the up and down direction, and thus, the air vent may be configured to be compact and slim, a smart image and a high-quality image may be provided, and in particular, the slim air vent apparatus for a vehicle may be applied to an autonomous vehicle having a smart image.

Furthermore, in the slim air vent apparatus according to various exemplary embodiments of the present invention, since the internal wing 200 and the external wing 300 are located to be inserted inside the duct 100, whereby the slim air vent apparatus may be implemented, and in particular, a hidden feeling may be provided, and the appearance may be improved.

Furthermore, in the slim air vent apparatus according to various exemplary embodiments of the present invention, since only the operation portion 410 of the knob 400 protrudes outwards from the duct 100, providing a hidden feeling and improving the appearance.

Furthermore, in the slim air vent apparatus according to various exemplary embodiments of the present invention, a function is implemented by manually operating the single knob 400 located in the center portion of the external wing 300 by the user, and thus, user convenience of operation may be improved through the configuration of operating the single knob 400, and in particular, unit costs may be reduced through the manual operation of the knob 400 and the slim air vent apparatus may be universally applied.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "forwards", and "backwards" are used to describe features of the exemplary embodiments with reference to the positions of such features as displayed in the figures. It will be further understood that the term "connect" or its derivatives refer both to direct and indirect connection.

The foregoing descriptions of specific exemplary embodiments of the present invention have been presented for purposes of illustration and description. They are not intended to be exhaustive or to limit the present invention to the precise forms disclosed, and obviously many modifications and variations are possible in light of the above teachings. The exemplary embodiments were chosen and described to explain certain principles of the present invention and their practical application, to enable others skilled in the art to make and utilize various exemplary embodiments of the present invention, as well as various alternatives and modifications thereof. It is intended that the scope of the present invention be defined by the Claims appended hereto and their equivalents.

## Claims

1. A slim air vent apparatus for a vehicle, the slim air vent apparatus comprising:
an external wing located at a rear of an internal wing, wherein a first end portion and a second end portion of the external wing are coupled to a duct to be rotatable vertically with respect to the duct; and
a knob coupling the internal wing and the external wing,
wherein the internal wing and the external wing are located inside the duct.

2. The slim air vent apparatus of claim 1, further including:
a pair of spacers provided to face first and second sides of the external wing from first and second sides of the duct,
wherein at least one of the spacers includes a guide slot extending along a rotation radius of the external wing, and
wherein a guide protrusion is provided on at least one of the first and second sides of the external wing and inserted into the guide slot to move along the guide slot when the external wing rotates.

3. The slim air vent apparatus of claim 1, further including:
a pair of spacers provided to face first and second sides of the external wing from first and second sides of the duct,
wherein at least one of the spacers includes a plurality of stopper recesses spaced from each other along a rotation radius of the external wing and recessed concavely, and
wherein a ball configured to be selectively inserted into one of the stopper recesses and an elastic member elastically supporting the ball are provided on at least one of the first and second sides of the external wing.

4. The slim air vent apparatus of claim 1, wherein a wing rod is integrally provided and protrudes forwards from the first and second sides of the external wing and overlap the internal wing.

5. The slim air vent apparatus of claim 4, wherein a coupling member penetrating an end portion of the wing rod is fixed to the duct and the wing rod of the external wing is rotatable vertically with respect to the duct based on the coupling member.

6. The slim air vent apparatus of claim 1, further including:
an upper dummy wing coupled to the duct and located at an upper side of the external wing,
wherein air is discharged through an upper flow path formed between the external wing and the upper dummy wing.

7. The slim air vent apparatus of claim 6, wherein a downwardly inclined surface and an upwardly inclined surface of a lower surface of the upper dummy wing facing the external wing are connected from the front to the rear thereof, and the downwardly inclined surface is longer than the upwardly inclined surface to improve directivity of air moving from the duct to the upper flow path.

8. The slim air vent apparatus of claim 1, further including:
a lower dummy wing coupled to the duct and located at a lower side of the external wing,
wherein air is discharged through a lower flow path formed between the external wing and the lower dummy wing.

9. The slim air vent apparatus of claim 8, wherein an upwardly inclined surface and a downwardly inclined surface of an upper surface of the lower dummy wing facing the external wing are connected from the front to the rear thereof, and the upwardly inclined surface is longer than the downwardly inclined surface to improve directivity of air moving from the duct to the lower flow path.

10. The slim air vent apparatus of claim 1, further including:
an upper dummy wing and a lower dummy wing coupled to the duct and located at upper and lower sides of the external wing,
wherein air is discharged through an upper flow path formed between the external wing and the upper dummy wing and a lower flow path formed between the external wing and the lower dummy wing.

11. The slim air vent apparatus of claim 10, wherein, when the external wing fully rotates upwards, air passing through the internal wing is discharged in an upward direction through the lower flow path,
wherein, when the external wing fully rotates downwards, air passing through the internal wing is discharged in a downward direction through the upper flow path, and
wherein the external wing has a rhombic cross-section to improve directivity of air moving from the duct to the upper flow path and from the duct to the lower flow path.

12. The slim air vent apparatus of claim 10, wherein an upper surface and a lower surface of the external wing are vertically symmetrical so that an air volume of air moving from the duct to the upper flow path and an air volume of air moving from the duct to the lower flow path are equal to each other when the external wing is located in an intermediate position between the upper dummy wing and the lower dummy wing.

13. The slim air vent apparatus of claim 10, wherein a downwardly inclined surface and an upwardly inclined surface of a lower surface of the upper dummy wing facing the external wing are connected from the front to the rear thereof, and the downwardly inclined surface is longer than the upwardly inclined surface to improve directivity of air moving from the duct to the upper flow path.

14. The slim air vent apparatus of claim 10, wherein an upwardly inclined surface and a downwardly inclined surface of an upper surface of the lower dummy wing facing the external wing are connected from the front to the rear thereof, and the upwardly inclined surface is longer than the downwardly inclined surface to improve directivity of air moving from the duct to the lower flow path.

15. The slim air vent apparatus of claim 10, wherein a lower surface of the upper dummy wing and an upper surface of the lower dummy wing are vertically symmetrical so that an air volume of air moving from the duct to the upper flow path and an air volume of air moving from the duct to the lower flow path are equal to each other when the external wing is located in an intermediate position between the upper dummy wing and the lower dummy wing.
